# EUROPEAN PATENT APPLICATION

(11) **EP 0 642 282 A1**
(43) Date of publication of application: **08.03.1995**
(21) Application number: 94201975.3
(22) Date of filing: 08.07.1994
(51) Int. Cl.: H04Q 3/62

(54) **Device for communication between private telephone networks and emulator used thereby**

(30) Priority: 28.07.1993 BE 9300788
(71) Applicant: ATEA, naamloze Vennootschap, B-2200 Herentals (BE)
(72) Inventor: Huybrighs, Jos, B-2430 Laakdal (BE)
(74) Representative: Debrabandere, René

(57) **Abstract**

Device for communication between private telephone networks having their own exchange (2,3,9,12,14 or 17), characterized in that in each of the exchanges in between which communication should be possible, it contains an emulator (4,5,11,13,15 or 18) which is connected to the exchange and has been accorded an identification number, and a transparent signalling network (6,16,19) between the emulators of said exchanges.

## Description

The invention concerns a device for communication between private telephone networks having their own exchange.

Private networks with their own exchanges, also called PBXs, have protocols which offer enormous possibilities such as automatic calling when a busy line becomes free, the automatic distribution of incoming calls, conference calls, mail-box, etc. However, not all these possibilities are offered everywhere by the public telephone network.

Thus, when the exchanges of private networks communicate via the public telephone network, one can normally not make use of these possibilities. Swapping of special signals would be required to this end which cannot be sent over the ordinary public telephone network. This can be done, however, via rented lines and this is why the known devices for communication between private telephone networks contain such a rented line from the public network, together with the necessary, usually quite complicated protocols to link the exchanges to one and other via the rented line.

Such rented lines are expensive, however.

The invention aims to remedy this disadvantage and to provide a device for communication between private telephone networks which makes the use of the ordinary lines of the public telephone network or a transit network with similar equipment as the public telephone network possible, such that communication between private networks is made possible without any special rented lines while still prevailing the possibilities and facilities of the private telephone networks.

This aim is reached according to the invention because the device, in each of the exchanges in between which communication via switched telephone services should be possible, contains an emulator which is connected to the exchange and has been accorded an identification number, and a transparent signalling network between the emulators of said exchanges.

Practically, each emulator hereby contains means to analyze incoming signals, means to identify the emulator of a calling network via a databank and means to establish an ordinary telephone connection via the public telephone network or a transit network between the exchanges.

The signalling network may be a voice frequency line of the public network, a separate channel, a data transmission network, etc. There is also a possibility to send the signals over the voice frequency channel itself (in-band) in order to avoid having to use any additional channels.

According to a particular embodiment of the invention, the emulator which belongs to the exchange of a private network is mounted on the front side of the exchange thereof, i.e. between said exchange and the public network or the transit network, such that the emulator handles the signalling of the public network or transit network.

According to another particular embodiment of the invention the emulator which belongs to the exchange of a private network is mounted on the back side of the exchange, in which case the exchange itself provides the access to the public telephone network or the transit network.

In both embodiments, the public network itself does not take part in the private call between the users of the private networks, since the signalling for the call takes place transparently via the signalling network.

The invention also concerns an emulator from a device according to any of the previous embodiments.

Other particularities and advantages of the invention will become clear from the following description of a device for communication between private telephone networks and of an emulator according to the invention used hereby. This description is given as an example only and does not restrict the invention in any way. The figures refer to the accompanying drawings, where:
figure 1 shows a block diagram of a device according to the invention for communication between private networks;
figure 2 shows a block diagram analogous to that in figure 1, but with reference to another embodiment of the invention;
figure 3 shows a block diagram analogous to that in figures 1 and 2, but with reference to yet another embodiment of the invention.

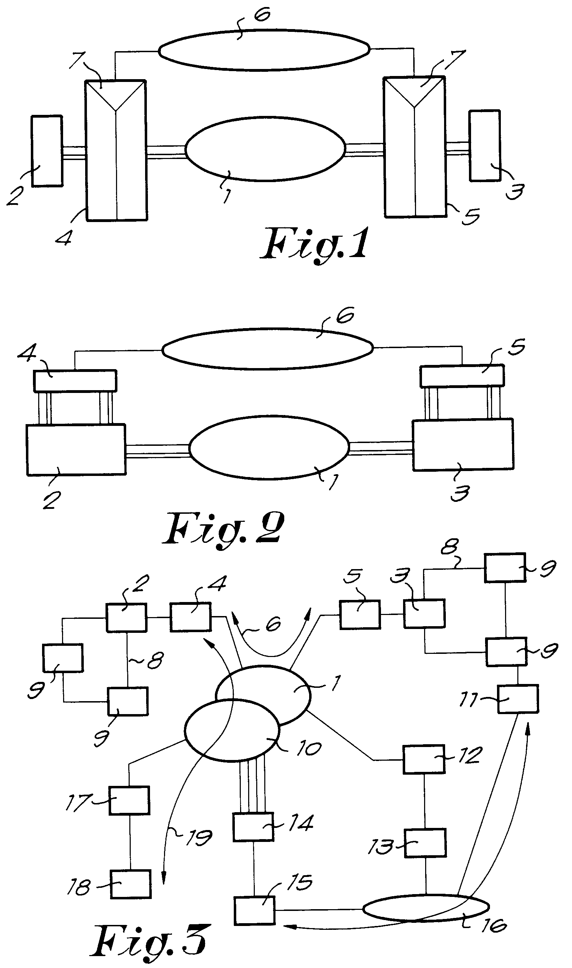

Figures 1 and 2 show a device for communication via ordinary lines of the public telephone network 1, for example the ISDN or PSTN network, between two exchanges 2 and 3, for example what are called Private Branch Exchanges (PBX), of two private networks.

The invention is characteristic in that an emulator 4, 5 respectively is mounted in each exchange and in that the emulators 4 and 5 are connected to one another via a signalling network 6. An identification number, for example a so-called Direct Dialing-In or DDI number, is accorded to each emulator 4 and 5.

The device separates the carrier connection and the signalling and it determines the identification number of the emulator to be called and contains the necessary means therefore.

Consequently, each of the emulators 4 and 5 contains means to establish a carrier connection via the public telephone network 1 or a transit network with an emulator 5 or 4 to be called. Each emulator contains means to hereby pass on its identification, i.e. the identification of the calling emulator. In the case of an ISDN carrier network, this can be done by means of the CLIP or Calling line Presentation service of ISDN; in the case of another public network by means of DTFM or digital time modulation frequency signals.

Each of the emulators 4 and 5 also contains means to establish the signalling connection with a calling emulator via the signalling network 6 when being called, provided this connection was not active yet, and to hereby swap the required checking data with the calling emulator.

The emulators 4 and 5 contain means to, when calling, after the signalling connection has been established, transmit the private signalling protocols of the exchanges 2 and 3 and preferably the abbreviated number for direct dialing-in (private numbering) of the called party and the calling party via the signalling network 6.

If only signals need to be exchanged between two emulators 4 and 5, without establishing a voice frequency channel (what are called non-call associated supplementary services"), the signalling will take place immediately from the calling to the called emulator, while possibly establishing the required signalling connection.

Thus, the public network which is operated by means of a dial or keyboard does not take part in the call control signalling between the exchanges 2 and 3. This signalling is done transparently via the signalling network 6.

The connection between the exchanges 2 and 3 and the corresponding emulators 4 and 5 behaves like a reserved tie line. Each emulator 4 and 5 contains a databank in which the numbers for direct dialing-in of all other emulators are stored and in fact the numbers (for example ISDN numbers) to reach the emulators via the public network 1 and consisting of a zone code, prefixes and the identification number.

The separate signalling network 6 may contain a fixed and permanent connection for each direction, for example a reserved or rented line of a data network, or it may be a connectable and disconnectable and thus semi-permanent connection via the public network 1. Thus, said signalling network 6 may consist of an X.25 package network, a number of reserved signalling lines, the D-channel 16 which is separated from the carrier call of the private exchange, the voice frequency line of the public network 1 itself (in-band signalling), i.e. the conversation and the accompanying private signalling are transmitted via the same connection (both in analogous and digital networks), etc.

In the embodiment represented in figure 1, the emulators 4 and 5 are mounted in front of the exchanges 2 and 3, i.e. between these exchanges and the public telephone network 1. This direct connection, whereby the emulator provides the interface with the public network 1, is suitable when the exchanges 2 and 3 need to be provided with a large number of public network carrier circuits for private and public network calls.

The emulator 4 or 5 in this embodiment not only serves to receive the calls from other private exchanges, but also the calls from other users of the public network 1. Therefore, the emulator should contain one or several public interfaces such as the PRA/S2 or BA/SB EuroISDN in order to have access to the ISDN network or the PCM30/CAS interface (one per emulator on the side of the network) in order to have access to the PSTN network. The latter interface makes use of an MFC register for the incoming signalling and a DTMF register for the outgoing signalling and works for example in compliance with the Belgian RTT specification CT1. The PRA/S2 EuroISDN interface contains 30 independent B-channels and one D-channel, each of 64 kbit/s and a PRA PCM interface in compliance with the CCITT recommendations.

In the configuration represented in figure 2, i.e. what is called the back-to-back configuration, the emulators 4 and 5 are mounted behind the exchanges 2 and 3. In this embodiment, the exchange 2 or 3 sends the outgoing call first to the corresponding emulator 4 or 5. This provides first for a carrier call with the emulator 4 or 5 of the called exchange via an ordinary vocal call, with the identification number of the latter emulator as a component of the called number. In this case, the access to the public telephone network 1 is provided by the exchange, and thus the interface with the public network is situated in the exchange itself. The signalling network 6 via which the signalling connection is subsequently established, may have the form of a signalling connection via the public telephone network, a separate X.25 package network, a data network, the ISDN user-user service and in-band signalling connections on carrier channels.

In this embodiment, the emulator 4 may have one or two PRA/S2 interfaces. In the first case, the incoming and feedback connections are on the same interface, which restricts the number of carrier channels to 15. In the other case, both connections 30 have carrier channels. This embodiment is recommended for analogous connections with the public network.

This embodiment is advantageous in that no approval from the public telephone service is required, in that no special public network interfaces are required and in that no intervention with supplementary services is required from the emulator.

Both embodiments can be combined. In one exchange the emulator can be mounted in front and in the other at the back.
One and the same emulator 4 may also have means for different transmission mechanisms depending on the destination emulator.
In figure 3, for example, is represented a hybrid network. The exchanges 2 and 3 are each connected via rented lines 8 with other private exchanges 9, whereas the corresponding emulators 4 and 5 are connected to one another by a switched connection 6 via the ISDN network 1 which is coupled to a PSTN public network 10. An emulator 11 is connected to the exchange 9 of one of the private networks. The hybrid network contains a number of extra networks and among others a PBX exchange 12 which is connected to the ISDN network 1 and is linked to an emulator 13, and a PBX exchange 14 which is connected to the analogous PSTN network 10 and is linked to an emulator 15. The emulators 11, 13 and 15 are linked to one another via an X25 data network 16. Yet another PBX exchange 17, coupled to an emulator 18 is connected to the PSTN network 10. The emulator 18 is connected to the emulator 4 through an in-band signalling via the voice frequency lines 19.

With a public ISDN network, a connection between the two exchanges, for example the exchanges 2 and 3, each coupled to an emulator 4 or 5, is established as follows, assuming that the emulators 4 and 5 are connected to one another via a signalling network 6:
The exchange 2 that wishes to establish a connection with an exchange 3 to this end emits a private network number. In the first place, a carrier call is established between the emulator 4 and the emulator 5 to be called. This call is established by the emulator 4 which makes an ordinary basic call to the carrier network. The private network number or address must be translated in an E.164 public emulator number in order to be able to reach the emulator 5. To this end, the emulator 4 searches in its databank for the identification number of the emulator 5 to be called. In order to avoid a complete translation by the emulator 4, the exchange 2 may add prefix numbers to the called number in the case of a closed numbering which determine the emulator 5 unambiguously and which can be converted by the emulator 4 in the E.164 number according to a stored table. This number is sent along in the starting message of the exchange 2, together with the public network number (a zone code, prefixes and the identification number thereof) of the emulator 4 itself. The carrier call is established according to the normal procedures for establishing a telephone conversation. In the case of an open numbering system the emulator 5 can translate the address of the called party, and no prefix figures are required.

When the emulator 5 receives the incoming carrier call, it checks both numbers in the starting message. If a number contains its identification number and the other number contains an identification number which is stored in its databank for an emulator, the emulator 5 accepts the call via the public network 1.

The called emulator 5 will start the signalling connection, provided it has not been connected yet to the emulator 4 via the signalling network 6. Via this connection, it swaps the required checking data with the emulator 4, after which the emulator 4 transmits the private signalling protocols of the exchanges 2 and 3 and the abbreviated number for direct dialing-in (private numbering) of the calling and called users.

The exchange 3 may be provided with extensions. In this case it can prevent the exchange 2 from making a new call to exchange 3 before the first call, whereby the emulator 4 has used an identification number of the emulator 5, has been accepted. In order to make this new call possible, a second identification number can be accorded to the emulator 5, and thus all emulators can have two such numbers.

When the exchange 2 calls an ordinary number of the public telephone network, this number does not contain a private identification number, as a result of which the emulator 4 is not activated and the call is transmitted through the emulator as an ordinary PSTN/ISDN call.

In the case of a non-ISDN public network, the method for establishing a connection is basically the same as described above. The only difference is that the address of the calling party is not used to indicate the calling emulator, so that other means must be used to identify the calling party and his signalling connection. This can be done by storing not only the number of the emulator of the called party, but also the number of the emulator of the calling party in the address of the latter, which implies that for every possible emulator-emulator direction an identification or DDI number must be reserved in the called emulator.

A calling emulator can also be identified via a DTMF sender and receiver, such that the invention is also applicable for networks which do not provide for any direct dialing-in. In this case, an emulator which receives a call will answer this call and wait until the sending emulator sends its identity by means of DTMF signalling.

Instead of the ISDN or PSTN or any other public telephone network or in addition to this network, the connection between the emulators can also be established via a transit/backbone network which is based on the equipment of the public network.
Each of the emulators 4, 5, 11, 13, 15 and 18 should therefore be capable to take care of the transport of private network data over the public network without any rented lines. It should not only be able to ensure calls from private exchange to private exchange, but it should also be able to establish calls from and to ordinary subscribers of the public telephone network. Possibly, the emulator may have a protocol transmitter function if it is mounted in a configuration with different types of exchanges and thus different exchange-to-exchange protocols are used.

Naturally, the emulator must contain the suited interface for the type of signalling network 6 to be used, and preferably the actual emulator is coupled via an interface to four signal units for four signalling methods and via an interface to one connection unit for establishing the carrier connection in the public network.

The above-mentioned interfaces are implemented on one or several cards. A card provides for the 24 S1 channel interfaces and the 32 S2 digital interfaces, plus moreover 6 High Level Data Link Control channels to detect and correct mistakes. Further, the emulator is programmed as a data terminal equipment and provided with the required micro connections. Via a V.24 port, the emulator can be connected to a local personal computer or an external modem. Further, the emulator has a seven-segment display which represents the status of the emulator and a 386 microprocessor with a dynamic RAM, Flash-RAM and EPROM memory. This emulator card is also connected to a card which contains the power supply and the interface connections.

The emulator can also be made as a modular system with several cards, of which one is the actual emulator card, another is a card for the power supply and yet another is a card for extra signalling channels, etc.

The different protocols and the operation of the intermediate processing unit 7 which takes care among others of the translation of the private network number of the called party in an E.164 public network number and the transparent transmission of the private network signalling messages via the signalling network to another emulator, are realized by the necessary software which is provided in the microprocessor of the emulator.

The above-described devices make it possible to establish a connection between exchanges of private networks via the ordinary lines of the public telephone network, be it analogous or digital, while preserving the protocols (DPNSS1, CorNet, QSIG, etc.) which are used for the mutual swapping of messages between the private exchanges via rented lines.

The invention is by no means restricted to the above-described embodiments, and within the scope of the patent application, many changes can be made to the described embodiments.

## Claims

1. Device for communication between private telephone networks having their own exchange (2,3,9,12,14 or 17), characterized in that in each of the exchanges (2,3,9,12,14 or 17) in between which communication via switched telephone services should be possible, it contains an emulator (4,5,11,13,15 or 18) which is connected to the exchange and has been accorded an identification number, and a transparent signalling network (6,16,19) between the emulators (4,5,11,13,15 or 18) of said exchanges (2,3,9,12,14 or 17).

2. Device according to the above claim, characterized in that each emulator (4,5,11,13,15 or 18) contains means to analyze incoming signals, means to identify the emulator (4,5,11,13,15 or 18) of a calling network via a databank and means to establish an ordinary telephone connection via the public telephone network (1) or a transit network between the exchanges (2,3,9,12,14 or 17).

3. Device according to any of the above claims, characterized in that each of the emulators (4,5,11,13,15 or 18) contains means to establish a carrier connection via the public telephone network (1) or a transit network with an emulator (4,5,11,13,15 or 18) to be called in order to, when it is called, start the signalling connection with a calling emulator (4,5,11,13,15 or 18) via the signalling network (6,16,19) provided this connection was not active yet, and to thereby swap the required checking data with the calling emulator (4,5,11,13,15 or 18) and to transmit the private signalling protocols of the exchanges (2,3,9,12,14 or 17) via the signalling network (6,16,19).

4. Device according to the above claim, characterized in that each emulator (4,5,11,13,15 or 18) contains means to transmit its identification, i.e. the identification of the calling emulator (4,5,11,13,15 or 18) when the carrier connection is established.

5. Device according to any of claims 3 and 4, characterized in that the means to transmit the private signalling protocols via the signalling network (6,16,19) contain means to transmit the abbreviated number for direct dialing-in (private numbering) of the called party and the calling party.

6. Device according to any of the above claims, characterized in that the signalling network (6,16,19) is a separate voice frequency line of the public telephone network, a separate channel, a data transmission network or the carrier connection for the voice frequency itself (in-band), and whereby the emulator can simultaneously support several signalling methods.

7. Device according to any of the above claims, characterized in that an emulator (4,5,11,13,15 or 18) corresponding to an exchange (2,3,9,12,14 or 17) of a private network is mounted on the front side of the exchange, i.e. between said exchange and the public network (1) or the transit network, such that the emulator (4,5,11,13,15 or 18) handles the signalling of the public network (1) or the transit network.

8. Device according to any of the above claims, characterized in that an emulator (4,5,11,13,15 or 18) corresponding to an exchange (2,3,9,12,14 or 17) of a private network is mounted on the back side of the exchange, in which case the exchange (2,3,9,12,14 or 17) itself provides the access to the public telephone network (1) or the transit network.

9. Emulator from the device according to any of the above claims, which contains means to analyze incoming signals, means to identify the emulator (4,5,11,13,15 or 18) of the calling network via a databank and means to establish an ordinary telephone connection via the public telephone network (1) or a transit network between the exchanges (2,3,9,12,14 or 17).
